# EUROPEAN PATENT APPLICATION

(11) **EP 1 313 044 A1**
(43) Date of publication of application: **21.05.2003**
(21) Application number: 01941039.8
(22) Date of filing: 13.06.2001
(51) Int. Cl.: G06F 17/60

(54) **ACCOUNT SETTLING SYSTEM**

(30) Priority: 21.06.2000 JP 2000186067
(71) Applicant: Blue Eye Ltd., Kyoto-shi, Kyoto 604-8117 (JP)
(72) Inventor: Yoshikawa, Shohei 349, Motohonnoji Minami-cho,, -ku, Kyoto-shi, Kyoto 604-8231 (JP)
(74) Representative: Pfenning, Meinig & Partner GbR
(86) International application number: JP0105043
(87) International publication number: WO01098972

(57) **Abstract**

An account settling system is incorporated into a stock buying/selling system for buying/selling securities by using a computer and a computer network, to settle the securities exchange. This account settling system is incorporated into a stock buying/selling system for paying for bought securities on or before the date of payment a predetermined number of days after the promised date of buying and for paying for bought securities on the date of reception of sales the predetermined number of days after the promised date of selling. If the selling of stocks is promised during the term from the promised date of buying the stocks to the selling date, it is possible to omit the payment of the shortage for settling the stock buying.

## Description

### TECHNICAL FIELD

The present invention relates to an account settling system incorporated into a securities buying/selling system adapted for buying and selling securities by using a computer and a computer network in order to settle the securities exchange.

### PRIOR ART

In general, the buying and selling prices of securities such as stocks in securities exchanges are settled on the date (settling date) after the lapse of the predetermined number of days from the promised date of buying or selling. In the case of stock exchanges in securities exchanges in Japan, the settling date for bought or sold stocks is set after the lapse of three business days from the promised date of buying or selling. The procedure of settling the buying and selling stocks in securities exchanges in Japan will be briefly described as follows.

When a customer buys some stocks, he or she first places an order for buying stocks with a predetermined securities exchange by way of a securities company under an engagement with the customer. When the buying of the stocks has been agreed, the securities company notifies the customer of the buying price of the stocks including a brokerage commission and taxes so as to make the payment to the securities exchange on the date of payment. When the customer has enough deposit in the customer account of the securities company to pay the buying price, the securities company subtracts the buying price from the deposit so as to complete the settlement between the securities company and the customer (hereinafter referred to as "buying settlement with the customers" when necessary). Therefore, there is no need for the customer to transfer money for the payment of the bought stocks into the account of the securities company. On the other hand, when the customer has not enough deposit in the customer account to pay for the bought stocks, the customer is supposed to transfer the shortage of funds into the account of the securities company within the four business days including the promised date of buying.

Some securities companies may set the promised date of buying for the buying settlement with the customer before the settlement date determined by the securities exchanges.

On the other hand, when a customer sells stocks, he or she places an order for selling the stocks with the predetermined securities exchange by way of a securities company. When the selling of the stocks has been agreed, the securities exchange transfers money into the account of the securities company on the date of reception after the lapse of three business days from the promised date of selling, and the securities company transfers the selling price from which the brokerage commission of the securities company and taxes are deducted to the customer account so as to complete the settlement between the securities company and the customer (hereinafter referred to as "the selling settlement with the customer" when needed).

Therefore, the customer is not allowed to freely withdraw the profit made by selling stocks or to appropriate the profit for the purchase of new stocks before the date of reception after the lapse of three business days from the promised date of selling.

As described above, in the conventional selling settlement with the customer, which is on the fourth business day from the promised date of selling, the customer finds it inconvenient that the profit made by selling stocks cannot be used freely such as appropriating it for the purchase of new stocks.

On the other hand, when the selling of some stocks has been agreed, the profit is supposed to be transferred into the customer account on the date of reception from the securities exchange by way of the securities company. Therefore, if a profit of stocks can be used for some necessary purposes before the date of reception, it will be very convenient for the customer, and it is considered to be very low risk for the securities company to finance the customer with funds by using as collateral the profit that has not been paid.

### PROBLEMS TO BE SOLVED BY THE INVENTION

The present invention has an object of providing an account settling system for facilitating account settlement by employment of an unpaid profit of sold stocks in a securities buying/selling system adapted for buying and selling securities by using a computer and a computer network.

In the present invention, the "buying price" includes the brokerage commission to be paid by the customer to the securities company and taxes (including a consumption tax and taxes related to stock exchange) deducted with regard to the stocks whose selling has been agreed. The "promised date of buying" means the date when the buying of stocks has been agreed. The "date of payment" means the date when the customer pays for bought stocks to the securities company so as to perform buying settlement with the customer.

The "selling price" means the amount of money transferred into the customer account after deducting the securities company's commission and taxes (including a consumption tax and taxes related to stock exchange) levied when necessary from the amount of money transferred from the securities exchange, with regard to the stocks whose selling has been agreed. The "promised date of selling" is the date when the selling of stocks has been agreed. The "date of reception" is the date when a profit made by selling stocks is transferred into the customer account so as to perform selling settlement with the customer.

### MEANS TO SOLVE THE PROBLEMS

The inventors of the present invention have found through various studies that the aforementioned problems can be solved by an account settling system incorporated into a securities buying/selling system so as to settle the securities exchange, the securities buying/selling system being designed such that a buying price is settled on or before the date of payment after the lapse of a predetermined number of days from a promised date of buying and a selling price is settled on the date of reception of sales after the lapse of the predetermined number of days from a promised date of selling by using a computer and a computer network, the account settling system comprising:
i) a buying information storage for receiving and storing information about the buying price, the promised date of buying, and the date of payment from a customer account of the securities buying/selling system;
ii) a deposit information storage for receiving and storing information about a deposit from the customer account of the securities buying/selling system;
iii) a selling information storage for making a comparison between said buying price stored in said buying information storage and said deposit stored in said deposit information storage, and receiving and storing information about said selling price and the date of reception from said customer account on or before the date of payment when said deposit is not enough to pay said buying price and the selling of securities is agreed between the promised date of buying and the date of payment;
iv) a financing unit for providing the customer with a loan within the limits of the selling price stored in the selling information storage and adding the amount of the loan to the deposit;
v) a settling unit for subtracting the buying price stored in the buying information storage from the deposit stored in the deposit information storage on or before the date of payment for settlement and storing the obtained amount in the customer account; and
vi) a returning unit for recording the amount of money obtained by subtracting the amount of the loan from the selling price on the date of reception in the customer account when the financing unit provides the customer with the loan.

The present invention will be described in detail as follows.

### BRIEF EXPLANATION OF THE DRAWINGS

Figure 1 is a diagrammatic view of the securities buying/selling system into which the account settling system of the present invention has been incorporated.
Figure 2 is a flow chart depicting securities buying/selling settlement performed by the account settling system of the present invention.
Figure 3 is another flow chart depicting securities buying/selling settlement performed by the account settling system of the present invention.

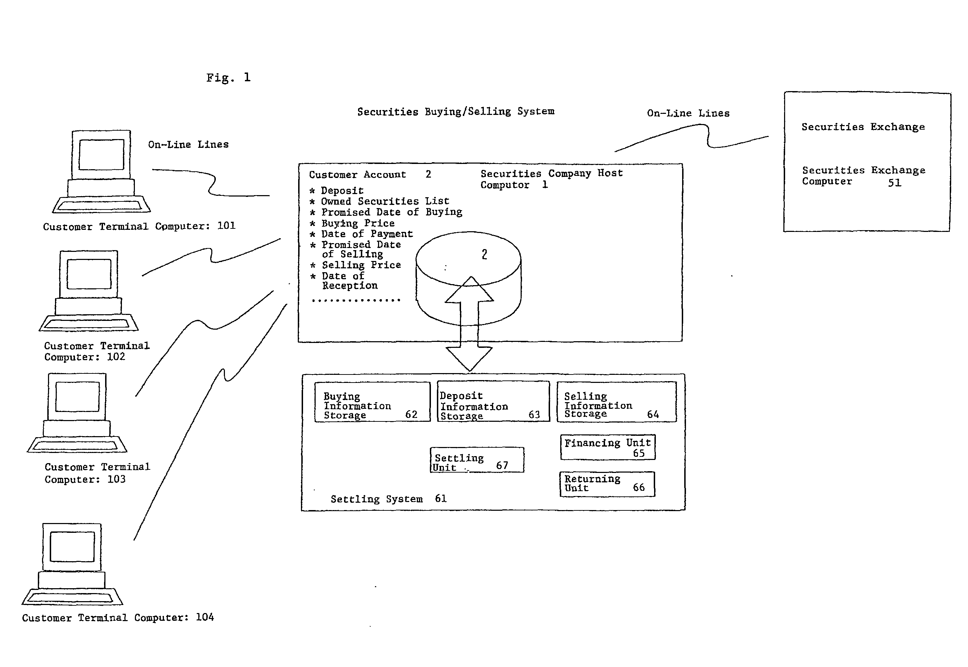

Figure 1 shows the account settling system as a first embodiment of the present invention, the account settling system being incorporated into a securities buying/selling system for buying and selling securities by using a computer and a computer network.

### EMBODIMENT 1

### [Securities Buying/Selling System]

This securities buying/selling system performs the buying and selling of securities by using a computer and a computer network. The securities buying/selling system includes a securities company host computer 1 installed in a securities company, customer terminal computers (101, 102,―) of individual customers, and a securities exchange computer 51 of a securities exchange. The securities company host computer 1 is connected with the customer terminal computers (101, 102, ―) and the securities exchange computer 51 via on-line lines (phone lines and the Internet, for example).

The customer terminal computers (101, 102,―) are used to enter ordering requirements including the brand of stocks, the presence or absence of a limit price, the unit price of stocks to buy or to sell, and the term of validity of an order which are needed for stock transaction on the predetermined ordering form transmitted from the securities company host computer 1. The ordering requirements entered in the ordering form are transmitted to the securities company host computer 1 via the on-line lines, together with customer identification information such as the customer's name, customer's ID and password to identify the customer.

Upon receipt of the ordering form containing the ordering requirements from the customer terminal computer, the securities company host computer 1 accesses the customer account found from the customer identification information and records the ordering in the customer account. The securities company host computer 1 then places an order for buying or selling stocks based on the ordering requirements with the securities exchange computer 51 of the securities exchange from the securities exchange transfer unit provided inside the host computer.

Upon receipt of the order from the securities company host computer 1, the securities exchange computer 51 of the securities exchange performs transaction based on the ordering requirements while the order is valid. When the transaction has been agreed, the securities exchange computer 51 notifies the securities company host computer 1 of the transaction results such as the date of agreement, the unit price of stocks to buy or to sell, the number of stocks to buy or to sell. On the other hand, when the transaction has not been agreed, the computer 51 transfers the results of disagreement to the securities company host computer 1. These results are received by the securities exchange reception unit of the securities company host computer 1 and are also recorded in the customer account.

The customer account on the securities company host computer 1 stores a list of securities such as stocks and the assets including a deposit owned by the customer. The customer account also stores the buying price, promised date of buying, and date of payment when the customer bought some stocks, and on the other hand, when the customer sold some stocks, it stores the selling price, promised date of selling, and date of reception, and the like.

### [Account Settling System]

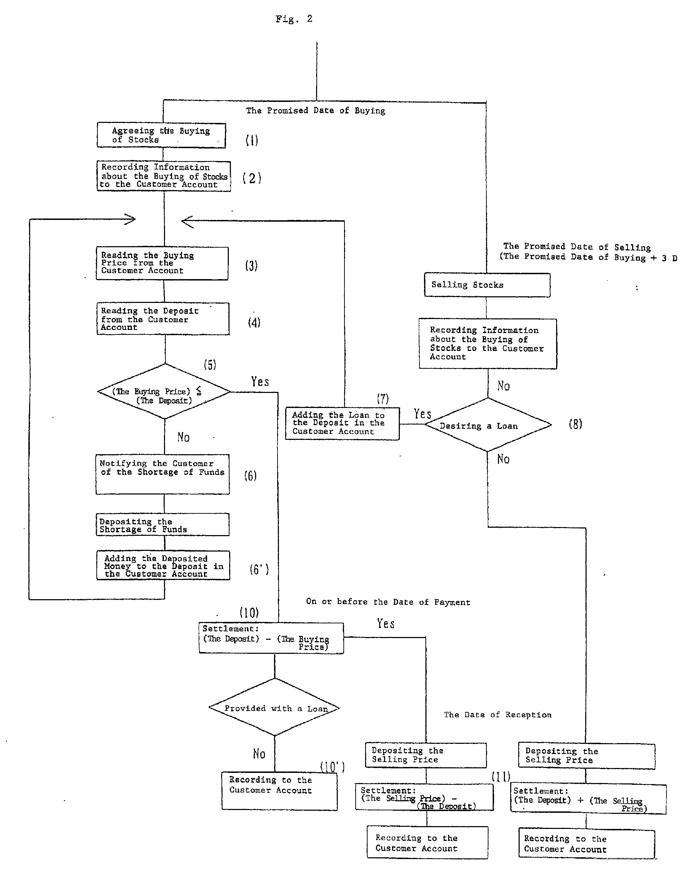

The account settling system of the present invention is incorporated into the securities buying/selling system as described above so as to settle the transaction between the customer and the securities company. The account settling system of the present invention will be detailed as follows, referring to the flowchart shown in Figure 2. The flowchart of Figure 2 is depicted on the assumption that the selling of stocks is agreed before the elapse of four business days after the promised date of buying new stocks.
(1) First, the buying of stocks is agreed.
(2) When the agreement of the buying of the stocks is informed by the securities exchange computer 51, the information about the bought stocks such as the stock brand, the number of stocks, the buying price, the promised date of buying, and the date of payment are recorded in the list of owned securities in the customer account on the securities company host computer 1.
(3) The account settling system of the present invention receives the information about the buying price, the promised date of buying, and the date of payment from the customer account and stores it in the buying information storage.
(4) The account settling system of the present invention receives information about the deposit from the customer account and stores it in the deposit information storage.
(5) The account settling system of the present invention compares the buying price stored in the buying information storage with the deposit stored in the deposit information storage so as to check whether the deposit is "enough" or "not enough" for the payment on the date of payment.
   This comparison is done with respect to the date of payment for the bought stocks. To be more specific, even when the deposit is not enough for the payment of the bought stocks on the promised date of buying, it is determined that the deposit is "enough" if the selling of the stocks is agreed before the promised date of buying and the profit can be appropriated for the bought stocks.
   A customer can check on a browser of the customer terminal computer to see the information about the price of newly bought stocks, the promised date of buying, and the date of payment recored in the customer account as well as the information as to whether the deposit is enough or not enough.
(6) When it is determined that the deposit is "not enough" at the step (5) in the account settling system of the present invention, the customer can make sure of it from the customer terminal computer, and the account settling system of the present invention urges the customer to deposit the short amount of money by sending e-mail or using other methods when necessary. The transferred amount of money is added to the deposit in the customer account (a step (6')).
(7) The account settling system of the present invention makes it possible that when it is determined that the deposit is "not enough" in the step (5) and when the selling of the stocks is agreed between the promised date of buying and the date of payment, the customer can use the profit to compensate for the shortage of funds for the bought stocks. In other words, the account settling system of the present invention has a financing unit which provides the customer with a loan on the date of payment within the limits of the selling price to be deposited on the date of reception coming after the date of payment, thereby appropriating the amount of the loan for the deposit so as to settle the buying of the stocks.
(8) In order to provide the customer with the loan from the financing unit, the customer is required to express his or her intentions to appropriate the profit made by selling the stocks for the payment of newly bought stocks on the customer terminal computer. Upon receipt of the customer's intentions, the account settling system receives the information about the selling price and the date of reception from the customer account and stores it in the selling information storage. And it provides the customer with the amount of money within the limits of the selling price stored in the selling information storage as a loan and stores it by adding to the deposit.
(9) Thus the deposit to which the loan has been added is again stored in the deposit information storage (the step (4)), and the buying price stored in the buying information storage and the deposit stored in the deposit information storage are compared again to determine whether the deposit is "enough" or "not enough" for the payment on the date of payment (the step (5)). In the case where the total amount of the deposit to which the loan has been added does not entirely cover the buying price, the customer must add money to compensate for the shortage of funds into the customer account.
(10) The buying price is subtracted from the deposit on the date of payment. This is performed by the settling unit of the account settling system of the present invention.
(10') When the customer is provided with no loan, the amount obtained by subtracting the buying price from the deposit is recorded on the customer account so as to complete the buying settlement with the customer about the buying of stocks.
(11) On the other hand, when the unpaid profit of the stocks is appropriated for the payment of the bought stocks by using the loan from the financing unit, the loan is subtracted from the selling price which the customer is supposed to receive on the date of reception so as to settle the selling settlement with the customer. In this case, the amount obtained by subtracting the loan from the selling price is added to the deposit and recorded in the customer account. This is the completion of the selling settlement of stocks.

The financing unit of the account settling system of the present invention could provide the customer with a loan by charging interest calculated by multiplying predetermined interest rates by the amount of the loan with regard to the financing period from the date of payment to the date of reception. In this case, the amount of interest is subtracted from the selling price to be deposited on the date of reception.

According to the present invention, when the promised date of selling stocks is between the promised date of buying new stocks and the date of payment, the customer can omit the trouble of adding money for the payment of the bought stocks to the customer account.

### EMBODIMENT 2

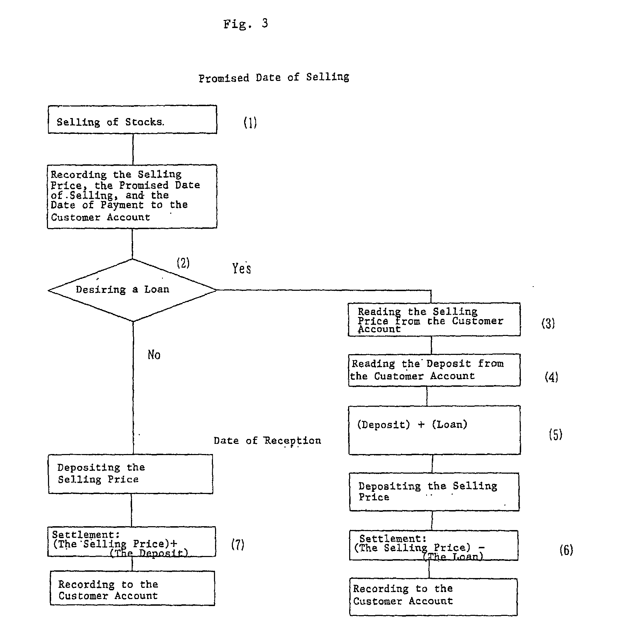

The account settling system of the present invention is not restricted to the case where the buying of stocks and the selling of stocks are performed in combination; the customer can use the selling price freely before the date of reception. This case is shown in the flowchart of Figure 3.

The present embodiment is similar to the first embodiment, but is wider in the point that the customer can use the profit of sold stocks for purposes other than the payment of bought stocks.

The account settling system of the present invention functions as follows.
(1) First, the selling of stocks is agreed, and information about the selling price, the promised date of selling, the date of reception and the like is recorded in the customer account.
(2) When the customer needs money before the date of reception within the limits of the expected selling price which is supposed to be deposited on the date of reception, the customer notifies the securities company host computer of it from the customer terminal computer.
(3) In above (2), when the customer expresses his or her intentions to want the profit of the sold stocks before the date of reception to the securities company host computer, the account settling system of the present invention receives information about the selling price, the promised date of selling, the date of reception and the like from the customer account, and stores it to the selling information storage.
(4) The account selling system of the present invention receives information about the deposit from the customer account and stores it in the deposit information storage.
(5) The customer is provided with a loan within the limits of the selling price. The amount of the loan is added to the deposit. The amount of the deposit is recorded in the customer account and/or the deposit information storage. The customer can freely use the amount of money within the limits of the deposit.
(6) When the customer is provided with a loan, the amount of money obtained by subtracting the amount of the loan from the selling price which is paid on the date of reception is added to the deposit and recorded.
(7) On the other hand, when the customer is provided with no loan, the selling price to be paid on the date of reception is added as it is to the deposit and recorded in the customer account.

The present invention makes it possible for the customer to use the selling price before the date of reception, which is convenient to the customer.

## Claims

1. An account settling system incorporated into a securities buying/selling system so as to settle the securities exchange, said securities buying/selling system being designed such that a buying price is settled on or before the date of payment after the lapse of a predetermined number of days from the promised date of buying, and a selling price is settled on the date of reception of sales after the lapse of the predetermined number of days from the promised date of selling by using a computer and a computer network, said account settling system comprising:
i) a buying information storage for receiving and storing information about said buying price, the promised date of buying, and the date of payment from a customer account of said securities buying/selling system;
ii) a deposit information storage for receiving and storing information about a deposit from said customer account of said securities buying/selling system;
iii) a selling information storage for making a comparison between said buying price stored in said buying information storage and said deposit stored in said deposit information storage, and receiving and storing information about said selling price and the date of reception from said customer account on or before the date of payment when said deposit is not enough to pay said buying price and the selling of securities is agreed between the promised date of buying and the date of payment;
iv) a financing unit for providing the customer with a loan within the limits of said selling price stored in said selling information storage and adding the amount of said loan to said deposit;
v) a settling unit for subtracting said buying price stored in said buying information storage from said deposit stored in said deposit information storage on or before the date of payment for settlement and storing the obtained amount in said customer account; and
vi) a returning unit for recording the amount of money obtained by subtracting the amount of said loan from said selling price on the date of reception in said customer account when said financing unit provides the customer with said loan.

2. The account settling system according to claim 1 further comprising a notification unit for notifying the customer of the shortage of funds and urging the customer to add money into said customer account so as to compensate for the shortage when the sum of said deposit stored in said deposit information storage and the amount of said loan is expected to fall short of said buying price.

3. The account settling system according to claim 1, wherein said financing unit subtracts the amount of interest calculated by multiplying predetermined interest rates by the amount of said loan with regard to a financing period from the date of payment to the date of reception from said selling price.

4. A method for settling the securities exchange in a securities buying/selling system designed such that a buying price is settled on or before the date of payment after the lapse of a predetermined number of days from a promised date of buying, and a selling price is settled on the date of reception of sales after the lapse of the predetermined number of days from a promised date of selling by using a computer and a computer network, said method comprising the steps of:
i) receiving and storing information about said buying price, the promised date of buying, and the date of payment from a customer account of said securities buying/selling system;
ii) receiving and storing information about a deposit from said customer account of said securities buying/selling system;
iii) making a comparison between said buying price and said deposit, receiving and storing information about said selling price and the date of reception from said customer account on or before the date of payment when said deposit is not enough to pay said buying price on the date of payment and the selling of securities is agreed between the promised date of buying and the date of payment;
iv) providing the customer with a loan within the limits of said selling price and adding the amount of said loan to said deposit;
v) settling by subtracting said buying price from said deposit on or before the date of payment; and
vi) recording the amount of money obtained by subtracting the amount of said loan from said selling price on the date of reception in said customer account when the customer is provided with said loan.

5. An account settling system incorporated into a securities buying/selling system so as to settle the securities exchange, said securities buying/selling system being adapted to sell securities and settle a selling price on the date of reception of sales after the lapse of a predetermined number of days from a promised date of selling by using a computer and a computer network, said account settling system comprising:
i) a buying information storage for receiving and storing information about said selling price, the promised date of selling, and the date of reception from a customer account of said securities buying/selling system;
ii) a deposit information storage for receiving and storing information about a deposit from said customer account of said securities buying/selling system;
iii) a financing unit for providing the customer with a loan within the limits of said selling price which is supposed to be paid on said customer account on the date of reception, and storing the sum of the amount of said loan and said deposit; and
iv) a returning unit for recording the amount of money obtained by subtracting the amount of said loan from said selling price on the date of reception in said customer account when said financing unit provides the customer with said loan.

6. The account settling system according to claim 5, wherein said loan is used for the payment of bought securities between the promised date of selling and the date of payment.

7. The account settling system according to claim 5, wherein said returning unit subtracts the amount of interest calculated by multiplying predetermined interest rates by the amount of said loan from said deposit with regard to the number of days from a date of finance of said financing unit to the payment of said returning unit.

8. A method for settling the securities exchange in a securities buying/selling system adapted to sell securities and settle a selling price on the date of reception of sales after a predetermined number of days from a promised date of selling by using a computer and a computer network, said method comprising the steps of:
i) receiving and storing information about said selling price, the promised date of selling, and the date of reception from a customer account of said securities buying/selling system;
ii) receiving and storing information about a deposit from said customer account of said securities buying/selling system;
iii) providing the customer with a loan within the limits of said selling price which is supposed to be paid on said customer account on the date of reception, and storing the sum of the amount of said loan and said deposit; and
iv) recording the amount of money obtained by subtracting the amount of said loan from said selling price on the date of reception in said customer account when the customer is provided with said loan.
